# EUROPEAN PATENT SPECIFICATION

(11) **EP 2 724 921 B1**
(45) Date of publication and mention of the grant of the patent: **09.09.2015**
(21) Application number: 13184020.9
(22) Date of filing: 12.09.2013
(51) Int. Cl.: B62J 25/00

(54) **Footrest assembly for motorcycles**
Fussstützenmechanismus für Motorrad
Mécanisme d'un repose-pied pour motocyclette

(30) Priority: 29.10.2012 TW 101139913
(43) Date of publication of application: 30.04.2014
(73) Proprietor: Kwang Yang Motor Co., Ltd., Kaohsiung City 80794 (TW)
(72) Inventor: Wu, Ren-Jay, Cambridge, CB1 1AH (GB); Lin, Chien-Cheng, Cambridge, CB1 1AH (GB)
(74) Representative: Horak, Michael

(56) References cited:
- EP-A1- 1 886 908
- CN-A- 102 452 427
- JP-A- H05 208 691

## Description

### (a) Technical Field of the Invention

The present invention generally relates to a footrest assembly for motorcycles, and more particularly to a footrest assembly for motorcycles that eases the control of expansion of a footrest.

### (b) Description of the Prior Art

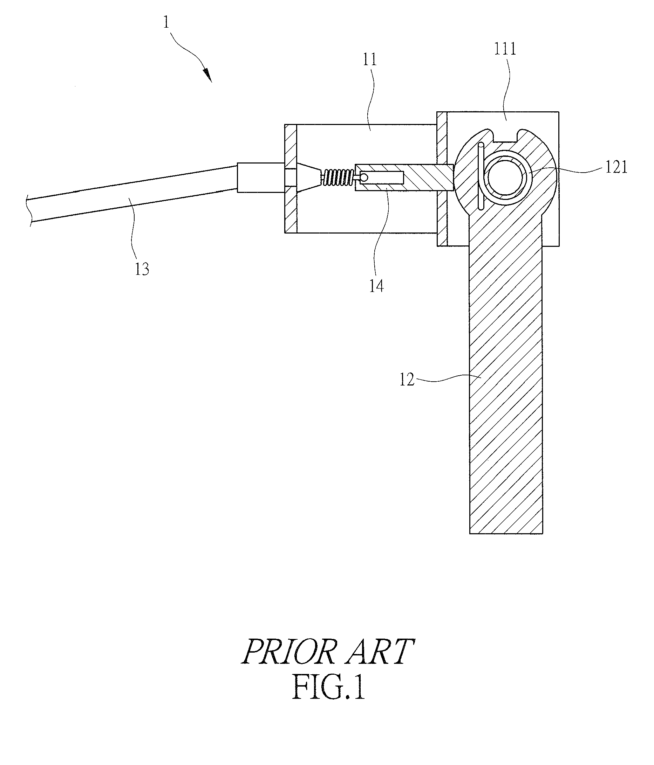

A footrest 1 of a motorcycle that is controlled by a control wire is shown in FIG. 1. The footrest 1 comprises a positioning seat 11, a foot peg 12, and a control wire 13.

The positioning seat 11 has an end mounted to a side frame of the motorcycle (not shown). The positioning seat 11 has a pivotal joint section 111 to which the foot peg 12 is pivotally connected. The positioning seat 11 has an opposite end to which the control wire 13 is coupled so that the control wire 13 is operable to drive a slide block 14. The slide block 14 selectively imposes a constraint to the foot peg 12. As such, the control wire 13 can be controlled to drive the slide block 14 to slide. When the slide block 14 releases the constraint of the foot peg 12, the foot peg 12 is ejected out of a side cover of the motorcycle body (not shown) by a spring force of a return spring 121 to allow a passenger to place a foot thereon.

In the above-described footrest 1 that is controlled by a control wire, the control wire 13 and the slide block 14 controlled thereby are both located at the side of the foot peg 12. In other words, an operation direction of the control wire 13 and the slide block 14 is on the same plane as a rotation direction of the foot peg 12. When the positioning seat 11 is mounted to the side frame of the motorcycle, the lateral width of the motorcycle body will be increased. Such a wire-controlled footrest 1would certainly add difficult to designing and engineering of the overall arrangement of the motorcycle. Thus, it is a challenge to be addressed by the motorcycle industry to overcome the drawback caused by the above-descried structure of the wire-controlled footrest 1.

The document EP1886908 represents the closest prior art in accordance with the preamble of claim 1.

### SUMMARY OF THE INVENTION

The primary object of the present invention is to overcome the drawback of the conventional motorcycle footrest that has poor operability and to improve the convenience of use of the footrest.

The technical solution adopted in the present invention comprises a foot peg and a constraint assembly. The foot peg has an end forming a rotation section. The rotation section comprises a rotation hole formed therein. The rotation section has an outer circumference that is recessed to form a guide slot. The guide slot has a side in which a constraint slot extending downward is formed. The constraint assembly comprises a coupling member and a constraint member. The coupling member comprises a downward-extending guide rail formed therein. The coupling member comprises a fixing section and a rotation axle extends downward from the fixing section. The rotation axle is receivable in a rotation hole of the foot peg, so that the rotation axle serves as a rotation center of the foot peg. The constraint member is received in the guide rail of the coupling member. The constraint member comprises a longitudinal fitting slot formed therein. A constraint block projects from one side of the fitting slot. The constraint block extends outside the guide rail of the coupling member. The constraint block is received in the guide slot of the foot peg. The coupling member and the constraint member are coupled to a control wire. The control wire has an opposite end that is connected to a driving unit. The constraint member of the constraint assembly and the control wire has an operation direction that is substantially normal to a rotation direction of the foot peg.

The efficacy that the present invention can achieve with the above described technical solution is that with such an arrangement, an increase of lateral width of a motorcycle body can be avoided and the constraint member is made slidable up and down in the guide rail of the coupling member so that the control of the foot peg by the constraint member is made effort-saving and the control of the foot peg is easy.

Another technical feature of the present invention is that the constraint member has a lower end extending out of the guide rail of the coupling member and projecting outside a notch of a closure cover and the portion of the constraint member that projects outside the notch of the closure cover forms a pressing section.

The efficacy achieved with the above-described technical feature is that when the driving unit or the control wire malfunctions and is thus incapable of operating the constraint assembly, making it not possible for the foot peg to eject out, a user may put a hand under the foot peg to push the pressing section of the constraint member in order to have the constraint block moved out of a constraint slot of the foot peg and thus allowing the foot peg to be ejected out by the spring force of a return spring, thereby ensuring the foot peg can be ejected out and operate properly.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG. 1 is a schematic view showing a conventional wire-controlled footrest.
FIG. 2 is a schematic view showing an arrangement of a footrest according to the present invention.
FIGS. 3 and 4 are schematic views illustrating assembling of the footrest according to the present invention.
FIG. 5 is an exploded view of the footrest assembly according to the present invention.
FIG. 6 is a schematic view illustrating an operation of a driving unit according to the present invention.
FIG. 7 is a schematic view illustrating an expanding operation of the footrest according to the present invention.
FIG. 8 is a schematic view illustrating the footrest of the present invention after expansion.
FIGS. 9 and 10 are schematic views illustrating a collapsing operation of the footrest according to the present invention.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

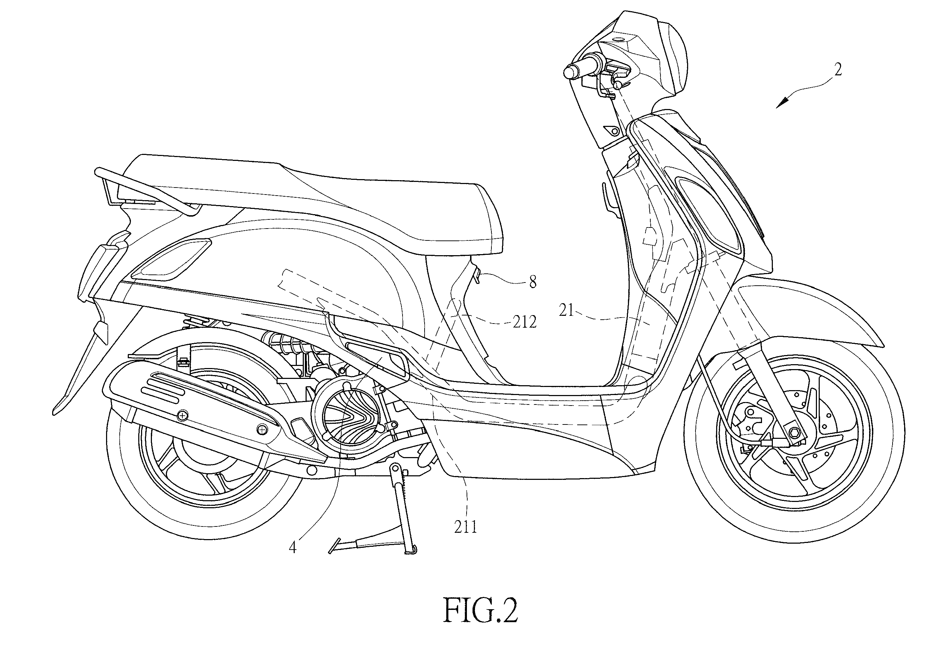

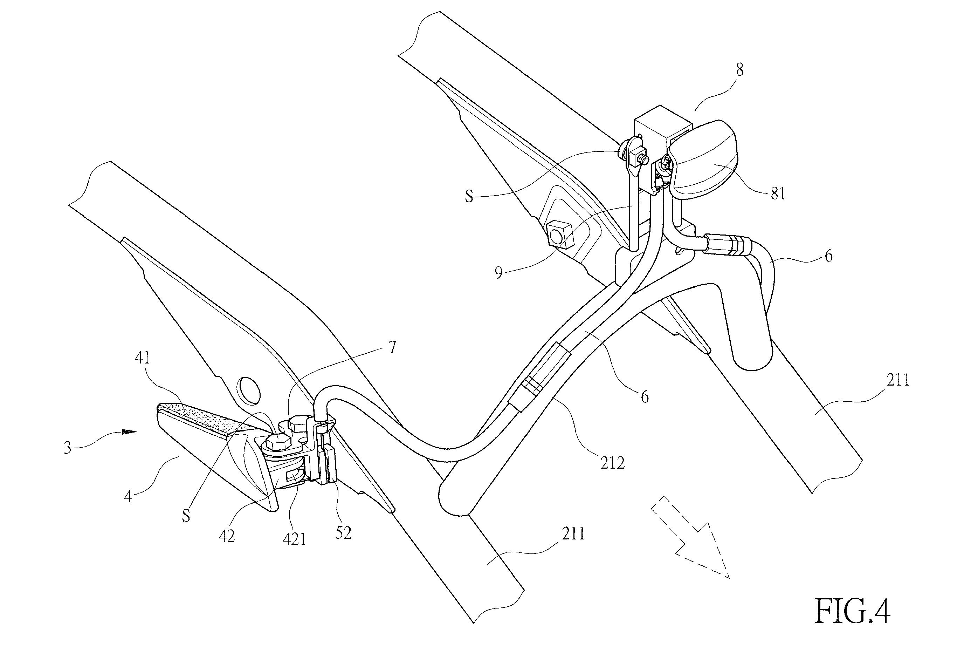

Referring first to FIGS. 2, 3, and 4 (in which the arrow indicates the direction of the front end of the motorcycle), a motorcycle 2 comprises a frame unit 21. The frame unit 31 comprises side frames 211 that are on two sides thereof and extend towards the tail of the motorcycle. An arch-like cross tube 212 is mounted between the side frames 211. The cross tube 212 has two end respectively mounted to the two side frames 211.

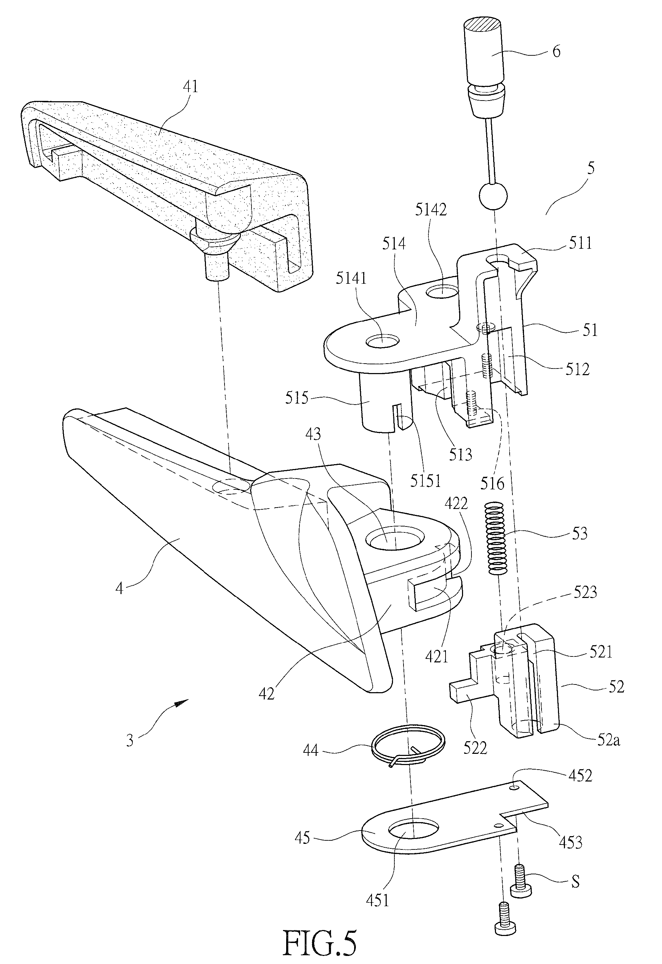

Further referring to FIG. 5, with additional reference to FIGS. 2, 3, and 4, the present invention provides a footrest assembly 3 that comprises a foot peg 4 and a constraint assembly 5.

The foot peg 4 is mounted to each of two sides of the motorcycle 2 in a symmetric manner. The following description is given to one of two foot pegs 4 as an example for illustration. The foot peg 4 has an outer circumference to which an anti-skidding member 41 is attached. The anti-skidding member 41 is made of a rubber material. The foot peg 4 has an end that forms a rotation section 42. The rotation section 42 comprises a rotation hole 43 formed therein. The rotation hole 43 receives a return spring 44 mounted therein. The rotation section 42 has a bottom to which a closure cover 45 is mounted. The closure cover 45 comprises a through hole 451, two fixing apertures 452, and a notch 453 formed therein. The rotation section 42 has an outer circumference that is recessed to form a guide slot 421. The guide slot 421 has an end having a lower wall in which a notch-like constraint slot 422 is formed to extend downward.

The constraint assembly 5 comprises a coupling member 51 and a constraint member 52. The coupling member 51 has a top forming a connection section 511 for connecting with a control wire 6. The connection section 511 is structured to form an open slot. Arranged under the connection section 511 is a longitudinal guide rail 512 that extends downward. Formed in one side of the guide rail 512 is a receiving compartment 513 having an opening facing downwards. Formed at one side of the connection section 511 is a fixing section 514, which comprises a first fixing hole 5141 and a second fixing hole 5142 formed therein. The fixing section 514 comprises a rotation axle 515 that is located below the first fixing hole 5141 and extends downward. The rotation axle 515 comprises a fitting slit 5151 formed therein. The rotation axle 515 is receivable in a rotation hole 43 of the foot peg 4, whereby the rotation axle 515 serves as a rotation center of the foot peg 4. Further, the return spring 44 of the foot peg 4 has one end retained in the rotation hole 43 and an opposite end of the return spring 44 is fit to and retained in the fitting slit 5151 of the rotation axle 515. Two mounting holes 516 are provided at one side of the guide rail 512.

The constraint member 52 is received in the guide rail 512 of the coupling member 51 in such a way that a lower end of the constraint member 52 extends outside the guide rail 512 of the coupling member 51 and also projects outside the notch 453 of the closure cover 45. The portion of the constraint member 52 that projects outside the notch 453 of the closure cover 45 forms a pressing section 52a. The constraint member 52 is provided with a longitudinal fitting slot 521. A constraint block 522 projects from one side of the fitting slot 521 in such a way that the constraint block 522 extends outside the guide rail 512 of the coupling member 51. Formed besides the constraint block 522 is a spring receiving hole 523 having an opening facing upward. The spring receiving hole 523 receives and retains therein a spring 53. The spring 53 has an upper end fit into the receiving compartment 513 of the coupling member 51, whereby the elastic extension force of the spring 53 constantly biases the constraint member 52 downward.

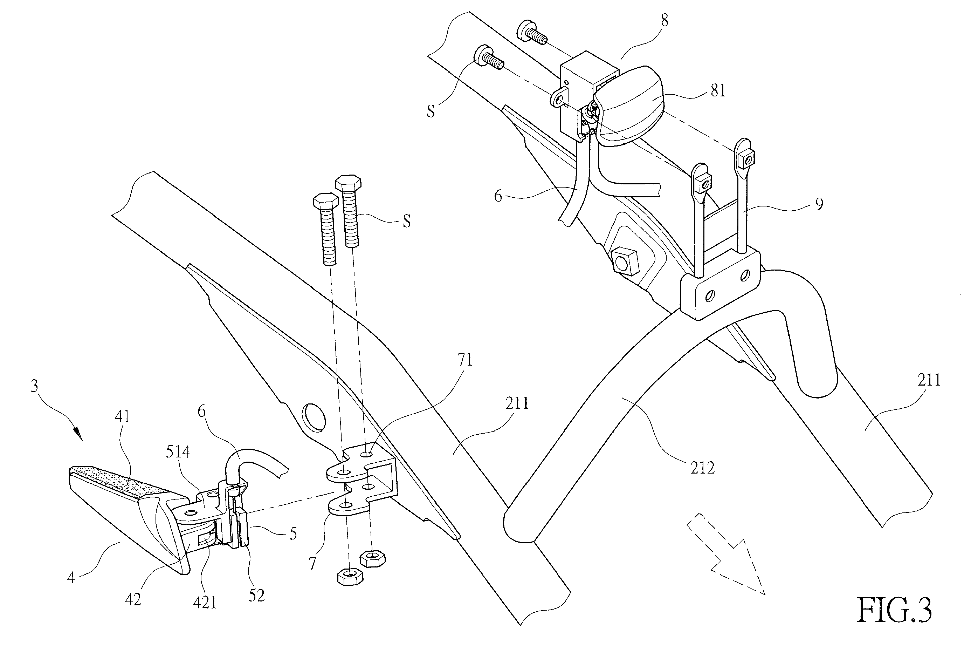

Referring to FIGS. 3, 4, and 5, to assemble the footrest assembly 3 according to the present invention, the rotation axle 515 of the constraint assembly 52 is inserted into the rotation hole 41 of the foot peg 4 with one end of the return spring 44 of the foot peg 4 fixed in the rotation hole 43 and another end of the return spring 44 fit in the fitting slit 5151 of the rotation axle 515. Meanwhile, the constraint block 522 of the constraint assembly 52 is fit into the guide slot 421 of the foot peg 4 and threading fasteners S are respectively fit through the fixing apertures 452 of the closure cover 45 and screwed to the mounting holes 516 of the constraint assembly 52. As such, assembling of the footrest assembly 3 is completed, whereby an operation direction of the constraint member 52 of the constraint assembly 5 and the control wire 6 is substantially perpendicular to a rotary direction of the foot peg 4. The assembled footrest assembly 3 can be further manipulated by having a threading fasteners S extending through fixing holes 71 of a mount seat 7 and the first fixing hole 5141 and the second fixing hole 5142 of the constraint assembly 52 to have the footrest assembly 3 threadingly fixed to the mount seat 7. The mount seat 7 can be welded, in advance, to the side frames 211 of the frame unit 21. As such, the footrest assembly 3 is securely mounted to the side frames 311 of the frame unit 3.

Further referring to FIGS. 3, 4, and 5, in the footrest assembly 3 according to the present invention, the coupling member 51 and the constraint member 52 of the constraint assembly 5 are coupled to the control wire 6 in such a way that an opposite end of the control wire 6 is allowed for connection with a driving unit 8. The driving unit 8 comprises at least one driving handle 81. The driving unit 8 is fixed, via a mounting bracket 9, to the cross tube 212 of the frame unit 21. As such, a user may pull the driving handle 81 of the driving unit 8 to have the control wire 6 driving the constraint member 52 of the constraint assembly 5 to operate thereby ejecting the foot peg 4 out. Specifically, since the driving unit 8 is located above the foot peg 4, excessive curving of the control wire 6 can be avoided and the length of the control wire can be effectively reduced.

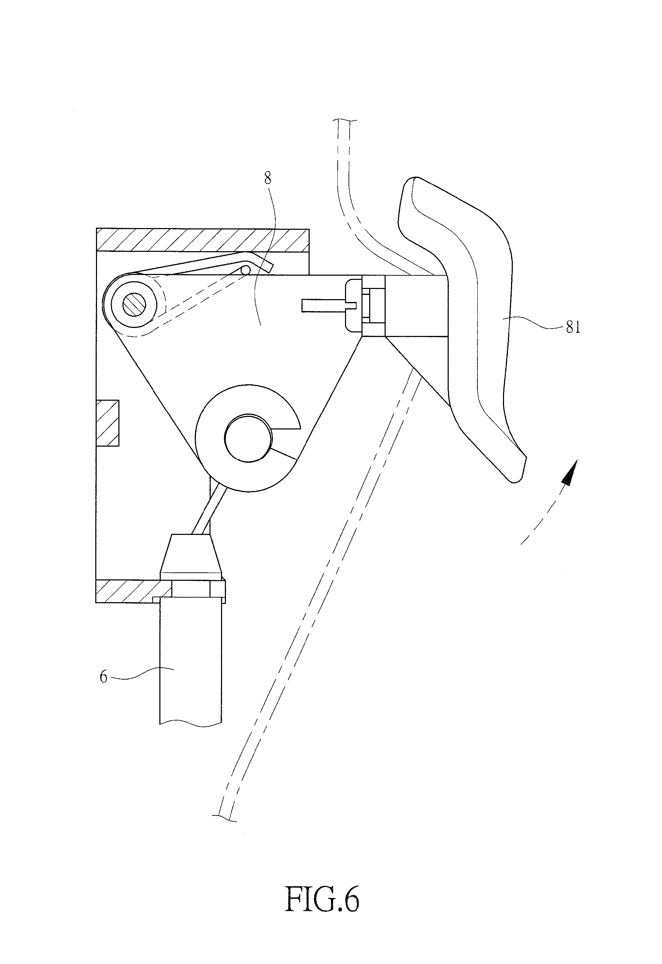

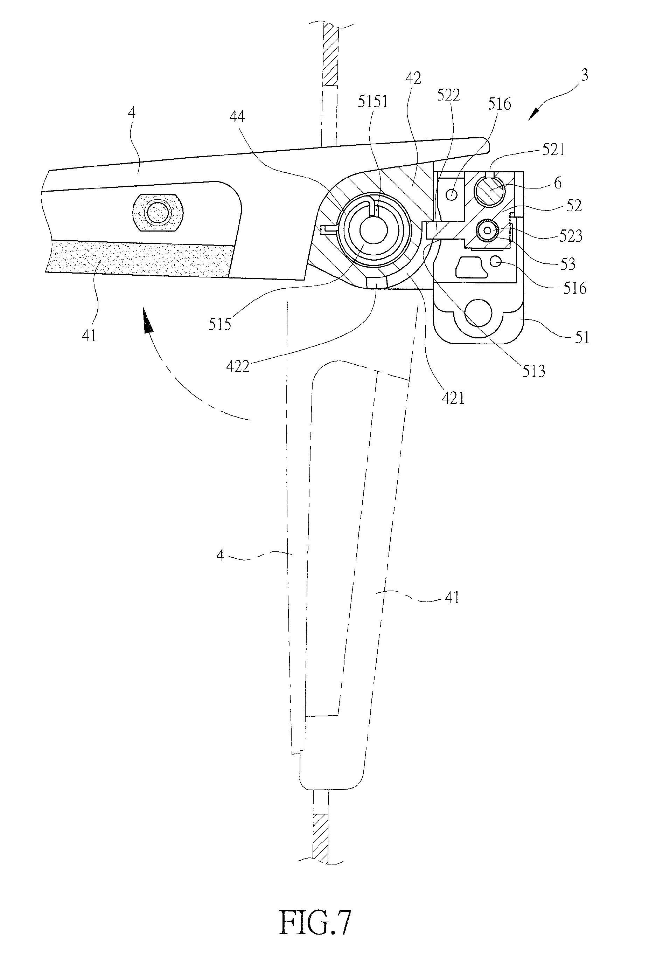

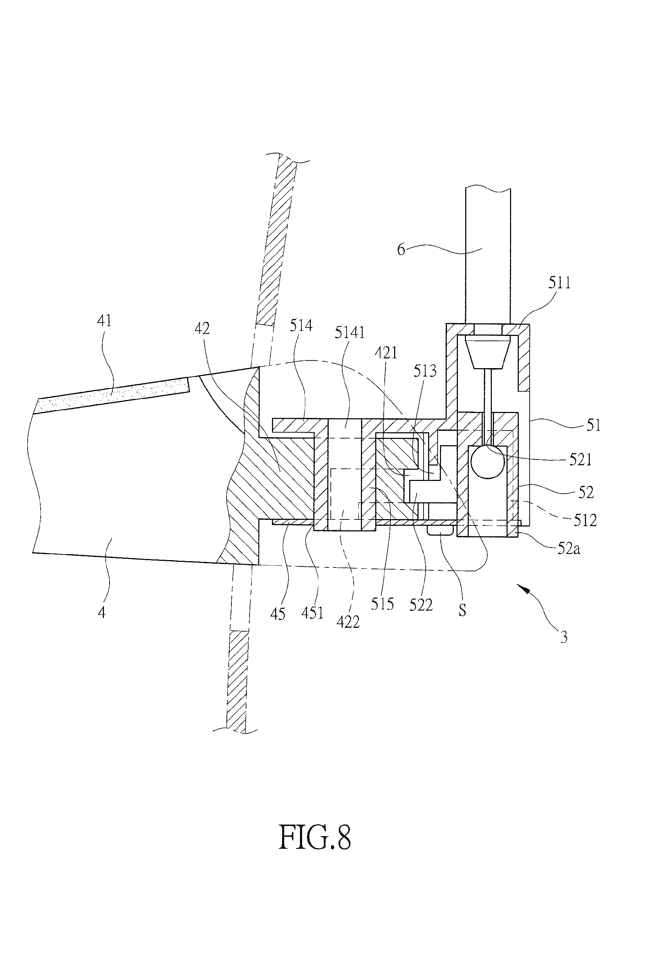

Referring to FIGS. 6, 7, and 8, to eject out the foot peg 4 from a collapsed condition to receive the feet of a passenger to place thereon, the user may follow what shown in FIG. 6 by using a hand to pull upward the driving handle 81 of the driving unit 8 so that the driving handle 81 drives, via the control wire unit 6, the constraint member 52 of the constraint assembly 5 to slide upward along the guide rail 512 of the coupling member 51. When the constraint member 52 slides upwards along the guide rail 512 of the coupling member 51, the constraint block 522 of the constraint member 52 is caused to move out of the constraint slot 422 of the foot peg 4 and moving into the guide slot 421 of the foot peg 4. When the constraint block 522 of the constraint member 52 moves out of the constraint slot 422 of the foot peg 4, the foot peg 4 is no longer constrained by the constraint member 42, whereby the foot peg 4 is elastically ejected outside the side frame 211 by the spring force of the return spring 44 received in the rotation hole 43 to receive a foot of the passenger to place thereon, as shown in FIGS. 7 and 8.

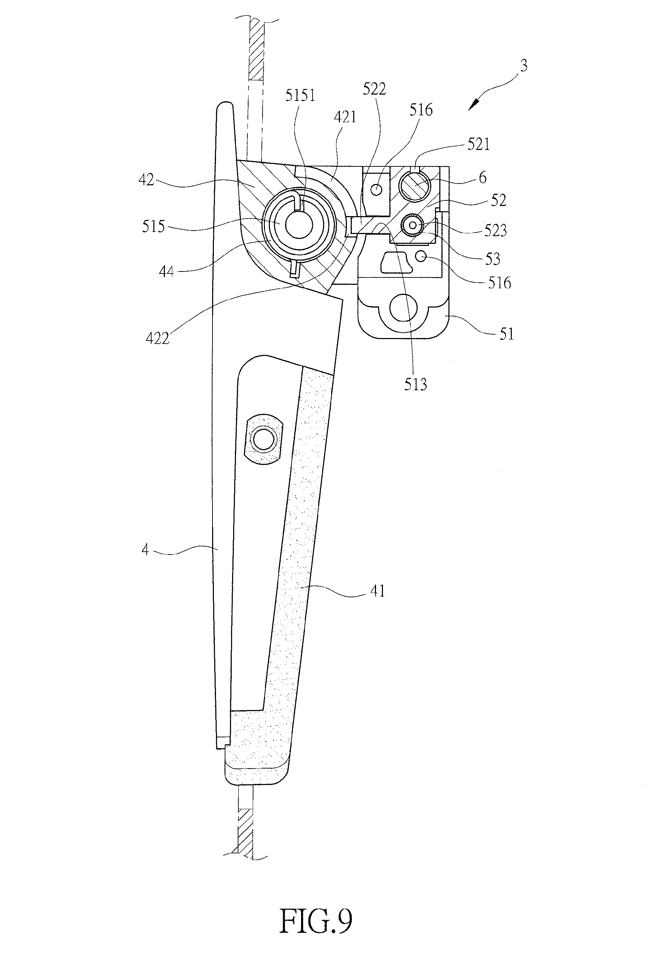

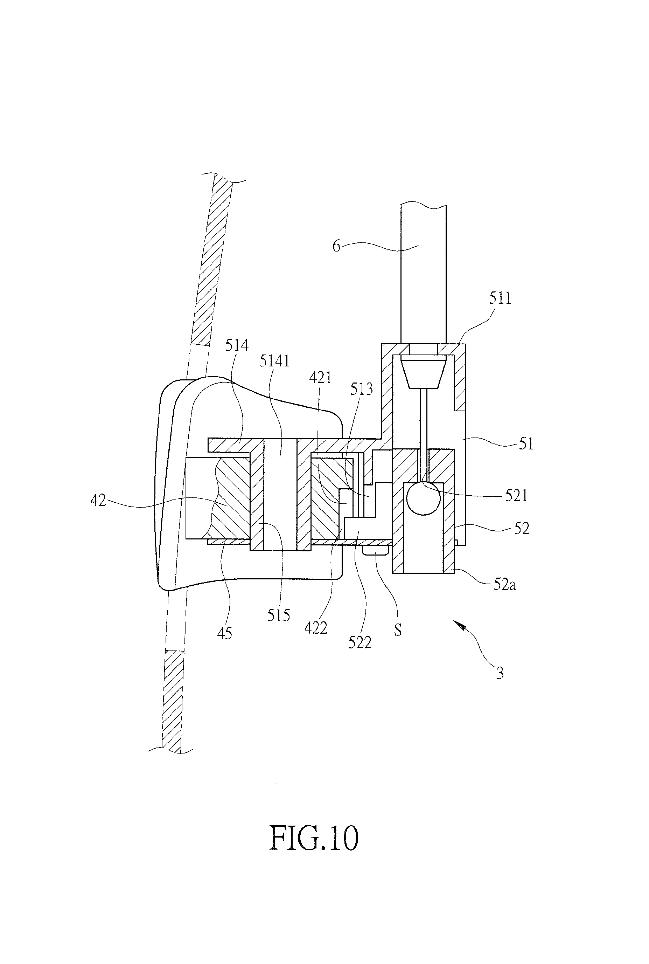

To have the foot peg 4 return to the collapsed condition, as shown in FIGS. 9 and 10, it only needs to push the foot peg 4 toward the motorcycle body so that the foot peg 4 is pushed, with the rotation axle 515 of the constraint assembly 52 as a center, into the side frame 211. Under this condition, in the one hand, the return spring 44 received in the rotation hole 43 of the foot peg 4 is driven to a tightened condition and on the other hand, the constraint block 522 of the constraint assembly 52 makes a corresponding movement in the guide slot 421 of the foot peg 41, whereby when the constraint block 522 slides to reach the constraint slot 422 of the foot peg 4, the constraint block 522 is forced by the compression spring force of the spring 523 of the constraint assembly 52 to slide into the constraint slot 422 of the foot peg 4 and the foot peg 4 is thus constrained. As such, the foot peg 4 cannot be biased by the spring force of the return spring 44 to eject outside the side frame 211 and is kept in the collapsed condition beside the motorcycle body.

Also referring to FIGS. 8 and 10, the constraint member 52 is received in the guide rail 512 of the coupling member 51 with the lower end of the constraint member 52 extending outside the guide rail 512 of the coupling member 51 and also projecting out of the notch 453 of the closure cover 45 to form the pressing section 52a, so that when the driving unit 8 or the control wire 6 malfunctions and is incapable of operating the constraint assembly 5, the user may put a hand under the foot peg 4 to push the pressing section 52a of the constraint member 52 that projects out of the notch 453 of the closure cover 45 so as to make the constraint member 52 similarly sliding within the guide rail 512 of the coupling member 51 for moving the constraint block 522 out of the constraint slot 422 of the foot peg 4 and thus allowing the foot peg 4 to be ejected out by the spring force of the return spring 44.

The efficacy of the present invention is that with the arrangement that the constraint member 52 of the constraint assembly 5 and the control wire 6 are set up to have an operation direction that is substantially perpendicular to the rotation direction of the foot peg 4, increase of lateral width of the body of the motorcycle can be avoided. Further, the constraint member 52 is arranged to be slidable up and down in the guide rail 512 of the coupling member 51 so that controlling the foot peg 4 with the constraint member 52 can be done in a more effort-saved manner, making the control of the foot peg 4 easy. Further, with the arrangement that the driving unit 8 is located above the foot peg 4, excessive curving the control wire 6 can be avoided and the length of the control wire can be effectively reduced; this, together with the arrangement that the operation direction of the constraint member 52 of the constraint assembly 5 and the control wire 6 is substantially perpendicular to the rotation direction of the foot peg 4, makes the control of the foot peg 4 even easer and more convenient. Further, with the arrangement that the lower end of the constraint member 52 extending outside the guide rail 512 of the coupling member 51 and also projecting out of the notch 453 of the closure cover 45 to form the pressing section 52a, when the driving unit 8 or the control wire 6 is broken or malfunctions to become incapable of operating the constraint assembly 5, a user may put a hand under the foot peg 4 to push the pressing section 52a of the constraint member 52 that projects out of the notch 453 of the closure cover 45 to have the foot peg 4 rotate out of the side of the motorcycle body.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the present invention.

## Claims

1. A footrest assembly for a motorcycle, comprising a foot peg (4) and a constraint assembly (5);
the foot peg (4) having an end that forms a rotation section (42), the rotation section (42) comprising a rotation hole (43) formed therein, the rotation section (42) having an outer circumference that is recessed to form a guide slot (421), the guide slot (421) having a wall in which a constraint slot (422) is formed to extend downward; and
the constraint assembly (5) comprising a coupling member (51) and a constraint member (52), the coupling member (51) comprising a guide rail (512) extending downward, the coupling member (51) comprising a fixing section (514), the fixing section (514) comprising a rotation axle (515) extending downward, the rotation axle (515) being receivable in the rotation hole (43) of the foot peg (4), whereby the rotation axle (515) serves as a rotation center of the foot peg (4); the constraint member (52) being received in the guide rail (512) of the coupling member (51), the constraint member (52) being provided with a longitudinal fitting slot (521),
**characterised in that**
a constraint block (522) projecting from one side of the fitting slot (521) in such a way that the constraint block (522) extends outside the guide rail (512) of the coupling member (51), the constraint block (522) being fit into the guide slot (421) of the foot peg (4); the coupling member (51) and the constraint member (52) being coupled to a control wire (6), another end of the control wire (6) being connected with a driving unit (8); wherein an operation direction of the constraint member (52) of the constraint assembly (5) and the control wire (6) is substantially perpendicular to a rotation direction of the foot peg (4).

2. The footrest assembly for the motorcycle according to claim 1, wherein the foot peg (4) has an outer circumference to which an anti-skidding member (41) is attached, the anti-skidding member (41) being made of a rubber material.

3. The footrest assembly for the motorcycle according to claim 1, wherein the rotation hole (43) of the rotation section (42) receives a return spring (44) mounted therein, the rotation section (42) having a bottom to which a closure cover (45) is mounted, the closure cover (45) comprising a through hole (451), two fixing apertures (452), and a notch (453) formed therein.

4. The footrest assembly for the motorcycle according to claim 1, wherein the coupling member (51) has a top forming a connection section (511) for connecting with the control wire (60), the connection section (51) being structured to form an open slot.

5. The footrest assembly for the motorcycle according to claim 1, wherein the fixing section (514) comprises a first fixing hole (5141) and a second fixing hole (5142) formed therein, the rotation axle (515) of the fixing section (514) being located below the first fixing hole (5141) and extending downward.

6. The footrest assembly for the motorcycle according to claim 3, wherein the return spring (44) of the foot peg (4) has one end retained in the rotation hole (43) and an opposite end of the return spring (44) is fit to and retained in the fitting slit (5151) of the rotation axle (515).

7. The footrest assembly for the motorcycle according to claim 1, wherein a spring receiving hole (523) is formed in one side of the constraint member (52), the spring receiving hole (523) receiving and retaining therein a spring (53), the spring (53) having an upper end fit into a receiving compartment (513) of the coupling member (51).

8. The footrest assembly for the motorcycle according to claim 1, wherein the constraint member (52) has a lower end that extends outside the guide rail (512) of the coupling member (51) and also projects out of a notch (453) of a closure cover (45), whereby a portion of the constraint member (52) that projects out of the notch (453) of the closure cover (45) forms a pressing section (52a).

9. The footrest assembly for the motorcycle according to claim 1 or 8, wherein the constraint member (52) is arranged in the guide rail (512) of the coupling member (51) in a manner of being slidable up and down.

10. The footrest assembly for the motorcycle according to claim 1, wherein the driving unit (8) is located above the foot peg (4).

## Patentansprüche

1. Fußstützenmechanismus für ein Motorrad mit einer Fußraste (4) und einem Zwangsmechanismus (5); wobei die Fußraste (4) ein Ende umfasst, das einen Rotationsabschnitt (42) bildet, der ein Rotationsloch (43) umfasst, das darin gebildet ist, wobei der Rotationsabschnitt (42) einen vertieften Außenumfang hat, um eine Führungsnut (421) zu bilden, wobei die Führungsnut (421) eine Wand umfasst, in der ein Zwangsschlitz (422) nach unten verläuft und der Zwangsmechanismus (5) ein Kupplungsglied (51) und ein Zwangsglied (52) umfasst, wobei das Kupplungsglied (51) eine Führungsschiene (512) umfasst, die nach unten verläuft, und das Kupplungsglied (51) einen Befestigungsabschnitt (514) umfasst, der Befestigungsabschnitt (514) umfasst eine Rotationsachse (515), die nach unten verläuft, die Rotationsachse (515) ist in einem Rotationsloch (43) der Fußraste (4) aufnehmbar, wodurch die Rotationsachse (515) als Rotationszentrum der Fußraste (4) dient; wobei das Zwangsglied (52) in der Führungsschiene (512) des Kupplungsgliedes (51) empfangen wird, wobei das Zwangsglied (52) mit einem Längspassschlitz (521) ausgestattet ist, **gekennzeichnet dadurch, dass** ein Zwangsblock (522), der derart aus einer Seite des passenden Schlitzes (521) ragt, dass der Zwangsblock (522) sich außerhalb der Führimgsschiene (512) des Kupplungsgliedes (51) erstreckt, in die Führungsnut (421) der Fußraste (4) passt; das Kupplungsglied (51) und das Zwangsglied (52) sind mit einem Steuerkabel (6) verbunden, ein anderes Ende des Steuerkabels (6) ist mit einer Antriebseinheit (8) verbunden, wobei eine Betriebsrichtung des Zwangglieds (52) des Zwangsmechanismus (5) und des Steuerkabels (6) im wesentlichen senkrecht zu einer Drehrichtung der Fußraste (4) ist.

2. Fußstützenmechanismus für das Motorrad nach Anspruch 1, wobei die Fußraste (4) einen Außenumfang hat, an dem ein rutschfestes Glied (41) angebracht ist, das aus einem Gummimaterial besteht.

3. Fußstützenmechanismus für Motorrad nach Anspruch 1, wobei das Rotationsloch (43) des Rotationsabschnitts (42) eine darin montierte Rückholfeder (44) aufnimmt, wobei der Rotationsabschnitt (42) einen Boden umfasst, an dem ein Verschlussdeckel (45) montiert ist, wobei der Verschlussdeckel (45) eine Durchgangsbohrung (451), zwei Befestigungsöffnungen (452) und eine Kerbe (453) umfasst, die darin gebildet sind.

4. Fußstützenmechanismus für Motorrad nach Anspruch 1, wobei das Kupplungsglied (51) ein Oberteil hat, das einen Verbindungsabschnitt (511) zur Verbindung mit dem Steuerkabel (60) bildet, wobei der Verbindungsabschnitt (51) einen offenen Schlitz bildet.

5. Fußstützenmechanismus für Motorrad nach Anspruch 1, wobei der Befestigungsabschnitt (514) ein erstes Befestigungsloch (5141) und ein zweites Befestigungsloch (5142) umfasst, die darin gebildet sind, wobei die Rotationsachse (515) des Befestigungsabschnitts (514) unterhalb des ersten Befestigungslochs (5141) positioniert ist und nach unten verläuft.

6. Fußstützenmechanismus für Motorrad nach Anspruch 3, wobei ein Ende der Rückholfeder (44) der Fußraste (4) in dem Rotationsloch (43) gehalten wird und ein gegenüberliegendes Ende der Rückholfeder (44) in den Passschlitz (5151) der Rotationsachse (515) passt und darin gehalten wird.

7. Fußstützenmechanismus für Motorrad nach Anspruch 1, wobei eine Federaufnahmebohrung (523) in einer Seite des Zwangsglieds (52) gebildet ist, die eine Feder (53) aufnimmt und darin hält, wobei die Feder (53) mit einem oberen Ende in einen Aufnahmezwischenraum (513) des Kupplungsgliedes (51) passt.

8. Fußstützenmechanismus für Motorrad nach Anspruch 1, wobei das Zwangsglied (52) ein unteres Ende hat, das sich außerhalb der Führungsschiene (512) des Kupplungsgliedes (51) erstreckt und auch aus einer Kerbe (453) eines Verschlussdeckels (45) herausragt, wodurch ein Teil des Zwangsglieds (52), das aus der Kerbe (453) des Verschlussdeckels (45) herausragt, einen Druckabschnitt (52a) bildet.

9. Fußstützenmechanismus für Motorrad nach Anspruch 1 oder 8, wobei das Zwangsglied (52) in der Führungsschiene (512) des Kupplungsglieds (51) auf- und abgleitbar angebracht ist.

10. Fußstützenmechanismus für Motorrad nach Anspruch 1, wobei die Antriebseinheit (8) sich oberhalb der Fußraste (4) befindet.

## Revendications

1. Ensemble repose-pied pour une motocyclette, comprenant un appui-pied (4) et un ensemble de contrainte (5); l'appui-pied (4) ayant une extrémité qui forme une section de rotation (42), la section de rotation (42) comprenant un trou de rotation (43) formé dedans, la section de rotation (42) ayant une circonférence extérieure qui est en retrait pour former une fente de guidage (421), la fente de guidage (421) ayant une paroi où une fente de contrainte (422) est formée pour s'étendre vers le bas; et l'ensemble de contrainte (5) comprenant un membre d'accouplement (51) et un membre de contrainte (52), le membre d'accouplement (51) comprenant un rail de guidage (512) s'étendant vers le bas, le membre d'accouplement (51) comprenant une section de fixage (514), la section de fixage (514) comprenant un axe de rotation (515) s'étendant vers le bas, l'axe de rotation (515) étant recevable dans un trou de rotation (43) de l'appui-pied (4), de manière que l'axe de rotation (515) sert de centre de rotation de l'appui-pied (4); le membre de contrainte (52) étant reçu dans le rail de guidage (512) du membre d'accouplement (51), le membre de contrainte (52) étant pourvu d'une fente d'encastrement longitudinale (521),
**caractérisé en ce que**
un bloc de contrainte (522) saillant d'un côté de la fente d'encastrement (521) de façon que le bloc de contrainte (522) s'étende à l'extérieur du rail de guidage (512) du membre d'accouplement (51), le bloc de contrainte (522) s'insérant dans la fente de guidage (421) de l'appui-pied (4); le membre d'accouplement (51) et le membre de contrainte (52) étant accouplés à un câble de commande (6), une autre extrémité du câble de commande (6) étant liée à une unité de propulsion (8); où une direction d'opération du membre de contrainte (52) de l'ensemble de contrainte (5) et du câble de commande (6) est substantiellement perpendiculaire à une direction de rotation de l'appui-pied (4).

2. Ensemble repose-pied pour la motocyclette selon la revendication 1, où l'appui-pied (4) a une circonférence extérieure à laquelle un membre anti-dérapage (41) est attaché, le membre anti-dérapage (41) étant fait en un matériel de caoutchouc.

3. Ensemble repose-pied pour la motocyclette selon la revendication 1, où le trou de rotation (43) de la section de rotation (42) reçoit un ressort de rappel (44) monté dedans, la section de rotation (42) ayant un fond auquel une couverture de fermeture (45) est montée, la couverture de fermeture (45) comprenant un trou de passage (451), deux ouvertures de fixage (452), et une encoche (453) formés dedans.

4. Ensemble repose-pied pour la motocyclette selon la revendication 1, où le membre d'accouplement (51) a une partie supérieure formant une section de connexion (511) pour la connexion avec le câble de commande (60), la section de connexion (51) étant structurée pour former une fente ouverte.

5. Ensemble repose-pied pour la motocyclette selon la revendication 1, où la section de fixage (514) comprend un premier trou de fixage (5141) et un deuxième trou de fixage (5142) formés dedans, l'axe de rotation (515) de la section de fixage (514) étant situé au-dessous du premier trou de fixage (5141) et s'étendant vers le bas.

6. Ensemble repose-pied pour la motocyclette selon la revendication 3, où le ressort de rappel (44) de l'appui-pied (4) a une extrémité retenue dans le trou de rotation (43) et une extrémité opposée du ressort de rappel (44) est adaptée à et retenue dans la fente d'encastrement (5151) de l'axe de rotation (515).

7. Ensemble repose-pied pour la motocyclette selon la revendication 1, où un trou de réception de ressort (523) est formé dans un côté du membre de contrainte (52), le trou de réception de ressort (523) recevant et retenant dedans un ressort (53), le ressort (53) ayant une extrémité supérieure qui s'insère dans un compartiment de réception (513) du membre d'accouplement (51).

8. Ensemble repose-pied pour la motocyclette selon la revendication 1, où le membre de contrainte (52) a une extrémité inférieure qui s'étend à l'extérieur du rail de guidage (512) du membre d'accouplement (51) et également saille d'une encoche (453) d'une couverture de fermeture (45), de manière qu'une partie du membre de contrainte (52) qui saille de l'encoche (453) de la couverture de fermeture (45) forme une section de pressage (52a).

9. Ensemble repose-pied pour la motocyclette selon la revendication 1 ou 8, où le membre de contrainte (52) est disposé dans le rail de guidage (512) du membre d'accouplement (51) de façon à glisser vers le haut et vers le bas.

10. Ensemble repose-pied pour la motocyclette selon la revendication 1, où l'unité de propulsion (8) est située au-dessus de l'appui-pied (4).
